# EUROPÄISCHE PATENTSCHRIFT

(11) **EP 3 778 118 B1**
(45) Veröffentlichungstag und Bekanntmachung des Hinweises auf die Patenterteilung: **16.03.2022**
(21) Anmeldenummer: 20200555.9
(22) Anmeldetag: 14.05.2018
(51) Int. Cl.: B23Q 39/00, B23Q 39/04

(54) **WERKZEUGMASCHINE MIT ZWEI ARBEITSSPINDELN**
MACHINE TOOL WITH TWO WORK SPINDLES
MACHINE-OUTIL POURVUE DE DEUX BROCHES DE TRAVAIL

(30) Priorität: 18.05.2017 AT 504252017
(43) Veröffentlichungstag der Anmeldung: 17.02.2021
(62) Teilanmeldung aus: 18736777.6
(73) Patentinhaber: Fill Gesellschaft m.b.H., 4942 Gurten (AT)
(72) Erfinder: DALLINGER, Friedrich, 4942 Gurten (AT)
(74) Vertreter: Burger, Hannes

(56) Entgegenhaltungen:
- EP-A1- 2 431 126
- WO-A1-2005/025801
- WO-A1-2016/177452
- WO-A2-2005/102596
- DE-A1- 2 458 770
- DE-A1-102004 019 924
- DE-A1-102007 044 282

## Beschreibung

Die Erfindung betrifft eine Werkzeugmaschine mit zwei Arbeitsspindeln und zwei Werkstücktischen zur Aufnahme von Werkstücken.

Aus der WO 2005/025801 A1 und der WO 00/37213 A2 sind sogenannte Doppelspindelmaschinen bekannt. Bei derartigen Doppelspindelmaschinen können zwei Werkstücke gleichzeitig mit jeweils einem in die Werkzeugspindeln eingesetzten Werkzeug bearbeitet werden. Beide Werkzeugspindeln und damit auch beide Werkzeuge werden synchron in den drei Achsen des Koordinatensystems verfahren, so dass an den beiden Werkstücken identische Bearbeitungsvorgänge ablaufen.

Die aus der WO 2005/025801 A1 und der WO 00/37213 A2 bekannten Doppelspindelmaschinen weisen den Nachteil auf, dass aufgrund deren Aufbau die maximale Länge des Werkstückes, welches bearbeitet werden kann, begrenzt ist.

Die DE 24 58 770 A1 offenbart eine Fräsmaschine mit vier Frässpindeln und einem in der X- und Y-Achse verfahrbaren Tisch. Der Tisch ist mit einer, um eine Achse "A" motorisch zur Z-Achse neigbaren, NC-gesteuerten, mit gemeinsam aufgespannten Werkstücken 5 versehenen Aufspannvorrichtung 4 ausgerüstet. Dieses Dokument offenbart somit den Gegenstand der Präambel des Anspruchs 1.

Die EP 2 161 098 A1 offenbart eine Fräsmaschine für die spanabhebende Umfangbearbeitung von drei Werkstücken gleichzeitig, mit einem 3-fach-Fräskopf mit drei parallel zueinander stehenden Fräserspindelachsen, einem 3-fach-Reitstock und einem 3-fach-Werkstückspindelstock mit drei in einer ersten horizontalen Hauptachsenrichtung parallel zueinander stehenden Werkstückspindelachsen.

Die WO 2005/102596 A2 offenbart eine Werkzeugmaschine mit wenigstens einer Arbeitsspindel zur Aufnahme von Werkzeugen für die Bearbeitung von in einem Arbeitsraum befindlichen Werkstücken, mit einem Maschinengestell, in/an dem in x-, y- und z-Richtung verfahrbare, diese Bewegungen an die Arbeitsspindel übertragende, Schlitten angeordnet sind, und mit einer zwischen zwei Seitenwänden des Maschinengestells um eine horizontale Schwenkachse schwenkbar gelagerten Werkstück-Haltevorrichtung.

Aufgabe der vorliegenden Erfindung war es, die Nachteile des Standes der Technik zu überwinden und eine Werkzeugmaschine zur Verfügung zu stellen, mittels derer Werkstücke mit großer Länge bearbeitet werden können.

Diese Aufgabe wird durch eine Vorrichtung gemäß den Ansprüchen gelöst.

Erfindungsgemäß ist eine Werkzeugmaschine ausgebildet, die folgende Bauteile umfasst:
ein Maschinengestell;
eine Spindelverstellvorrichtung, welche am Maschinengestell angeordnet ist;
zumindest eine erste Arbeitsspindel, welche um eine erste Spindelachse drehbar gelagert ist, und eine zweite Arbeitsspindel, welche um eine zweite Spindelachse drehbar gelagert ist, wobei die Arbeitsspindeln an der Spindelverstellvorrichtung aufgenommen sind und mittels der Spindelverstellvorrichtung in einer Z-Achse, in einer X-Achse und in einer im rechten Winkel zur Z-Achse und X-Achse angeordneten Y-Achse relativ zum Maschinengestell verstellbar sind;
eine Werkstückspannvorrichtung, welche am Maschinengestell angeordnet ist und zum Aufnehmen zumindest eines ersten Werkstückes und eines zweiten Werkstückes ausgebildet ist. Die Spindelverstellvorrichtung umfasst einen Arbeitskopf, an dem die beiden Arbeitsspindeln angeordnet sind und dass die Werkstückspannvorrichtung zumindest einen ersten Werkstücktisch und einen zweiten Werkstücktisch umfasst, wobei der erste Werkstücktisch um eine erste Schwenkachse, welche parallel zur X-Achse ausgerichtet ist, schwenkbar gelagert ist und der zweite Werkstücktisch um eine zweite Schwenkachse, welche parallel zur X-Achse ausgerichtet ist, schwenkbar gelagert ist und dass die erste Arbeitsspindel dem ersten Werkstücktisch zugeordnet ist und die zweite Arbeitsspindel dem zweiten Werkstücktisch zugeordnet ist.

Weiters kann vorgesehen sein, dass die Z-Achse vertikal ausgerichtet ist und dass die X-Achse horizontal ausgerichtet ist.

Weiters ist vorgesehen, dass der Arbeitskopf um eine Arbeitskopfschwenkachse, welche parallel zur Y-Achse ausgerichtet ist, schwenkbar gelagert ist.

Von Vorteil an der erfindungsgemäßen Werkzeugmaschine ist, dass für jedes der beiden Werkstücke ein eigener Werkstücktisch vorgesehen ist, welcher um eine eigene Schwenkachse schwenkbar ist. Dadurch können in der vorliegenden Werkzeugmaschine zwei Werkstücke mit einer großen Längserstreckung gespannt werden und parallel zueinander bearbeitet werden.

Natürlich kann auch vorgesehen sein, dass die Werkzeugmaschine neben der ersten Arbeitsspindel und der zweiten Arbeitsspindel auch noch weitere Arbeitsspindeln aufweist. Hierzu können auch weitere Werkstücktische vorgesehen sein, welche den Arbeitsspindeln zugeordnet sind.

Weiters kann es zweckmäßig sein, wenn die Spindelverstellvorrichtung eine Hauptverstelleinheit aufweist, welche mittels einer X-Achsen-Linearführung mit dem Maschinengestell gekoppelt ist und entlang der X-Achse relativ zum Maschinengestell verschiebbar ist und dass die Spindelverstellvorrichtung eine Höhenverstelleinheit aufweist, welche mittels einer Z-Achsen-Linearführung mit der Hauptverstelleinheit gekoppelt ist und entlang der Z-Achse relativ zur Hauptverstelleinheit verschiebbar ist und dass die Spindelverstellvorrichtung eine Ausschubeinheit aufweist, welche mittels einer Y-Achsen-Linearführung mit der Höhenverstelleinheit gekoppelt ist und entlang der Y-Achse relativ zur Höhenverstelleinheit verschiebbar ist, wobei der Arbeitskopf mittels einer Schwenklagerung mit der Ausschubeinheit gekoppelt ist und um die Arbeitskopfschwenkachse relativ zur Ausschubeinheit schwenkbar ist. Durch diese Anordnung können die Bearbeitungswerkzeuge zielgerichtet relativ zu den zu bearbeitenden Werkstücken positioniert werden.

Ferner ist vorgesehen, dass die beiden Werkstücktische jeweils mittels einer ersten Schwenklagerung und mittels einer zweiten Schwenklagerung mit dem Maschinengestell gekoppelt sind, wobei beide Werkstücktische einen Werkstückspannbereich aufweisen, welcher jeweils zwischen den beiden Schwenklagerungen ausgebildet ist. Von Vorteil ist hierbei, dass durch diese Ausbildung die Werkstücktische frei bezüglich ihrer Schwenkachse drehbar sind und zur Aufnahme von Werkstücken mit einer großen Längserstreckung dienen.

Darüber hinaus kann vorgesehen sein, dass der Werkstückspannbereich bezüglich der X-Achse eine nutzbare Werkstückspannlänge zwischen 1000mm und 8000mm, insbesondere zwischen 1400mm und 5000mm, bevorzugt zwischen 1500mm und 2500mm aufweist. Dadurch können Werkstücke mit einer großen Längserstreckung am Werkstücktisch gespannt werden.

Vorteilhaft ist auch eine Ausprägung, gemäß welcher vorgesehen sein kann, dass die erste Spindelachse der ersten Arbeitsspindel und die zweite Spindelachse der zweiten Arbeitsspindel bezüglich der Y-Achse in einem Abstand versetzt zueinander angeordnet sind.

Gemäß einer Weiterbildung ist es möglich, dass der Abstand zwischen 200mm und 1500mm, insbesondere zwischen 300mm und 1000mm, bevorzugt zwischen 400mm und 600mm beträgt. Bei einer derartigen Dimensionierung lässt sich eine große Anzahl von herzustellenden Werkstücken spannen.

Weiters kann vorgesehen sein, dass im Arbeitskopf eine Verstellvorrichtung angeordnet ist, mittels welcher der Abstand der ersten Spindelachse der ersten Arbeitsspindel und der zweiten Spindelachse der zweiten Arbeitsspindel zueinander verstellt werden kann. Von Vorteil ist hierbei, dass durch diese Maßnahme Maßdifferenzen ausgeglichen werden können, welche aufgrund von Wärmedehnungen im Arbeitskopf und/oder in der Werkstückspannvorrichtung auftreten können. Die Verstellvorrichtung kann verschiedene Arten von Aktoren aufweisen, mittels welchen der Abstand verstellt werden kann.

Ferner kann es zweckmäßig sein, wenn die erste Schwenkachse des ersten Werkstücktisches und die zweite Schwenkachse des zweiten Werkstücktisches bezüglich der Y-Achse in einem Abstand versetzt zueinander angeordnet sind.

Darüber hinaus kann vorgesehen sein, dass der Abstand zwischen der ersten Spindelachse der ersten Arbeitsspindel und der zweiten Spindelachse der zweiten Arbeitsspindel und der Abstand zwischen der ersten Schwenkachse des ersten Werkstücktisches und der zweiten Schwenkachse des zweiten Werkstücktisches gleich groß sind. Durch diese Maßnahme können die beiden Werkstücke synchron zueinander bearbeitet werden.

Weiters kann vorgesehen sein, dass die beiden Werkstücktische in deren Drehbewegung um die Schwenkachsen von einer gemeinsamen Antriebseinheit angetrieben werden. Von Vorteil ist hierbei, dass durch diese Maßnahme ein zusätzlicher Antrieb eingespart werden kann. Zusätzlich ist gewährleistet, dass die beiden Werkstücktische synchron zueinander bewegt werden.

Gemäß einer besonderen Ausprägung ist es möglich, dass die gemeinsame Antriebseinheit mittels einem Schneckengetriebe mit den beiden Werkstücktischen gekoppelt ist.

Alternativ dazu kann vorgesehen sein, dass die gemeinsame Antriebseinheit mittels einem Zahnriemen mit den beiden Werkstücktischen gekoppelt ist.

Insbesondere kann es vorteilhaft sein, wenn die Antriebseinheit in Form eines Torquemotors ausgebildet ist. Von Vorteil ist hierbei, dass ein derartiger Torquemotor bei einer hohen Positioniergenauigkeit gleichzeitig zum Aufbringen eines großen Drehmomentes ausgebildet ist.

Ferner kann vorgesehen sein, dass in einer unverschwenkten Stellung des Arbeitskopfes die Spindelachsen der beiden Arbeitsspindeln parallel zur Z-Achse liegen.

Darüber hinaus kann vorgesehen sein, dass die beiden Werkstücktische ausschließlich um die X-Achse schwenkbar sind und ansonsten nicht relativ zum Maschinengestell bewegbar sind. Von Vorteil ist hierbei, dass durch diese Maßnahme eine möglichst geringe Anzahl von eigenständigen Antrieben benötigt wird und die Werkzeugmaschine dabei eine große Vielfältigkeit bezüglich deren möglicher Bewegung aufweist. Darüber hinaus kann durch diese Maßnahme erreicht werden, dass die Werkzeugmaschine möglichst geringe Abmaße aufweist, da die Werkstücke nicht um deren normal auf die Längsachse der Längserstreckung stehende Hochachse rotiert werden müssen.

Vorteilhaft ist auch eine Ausprägung, gemäß welcher vorgesehen sein kann, dass die beiden Arbeitsspindeln in deren Drehbewegung um die Spindelachsen von einer gemeinsamen Antriebseinheit angetrieben werden, insbesondere dass die gemeinsame Antriebseinheit mittels einem Zahnriemen mit den beiden Arbeitsspindeln gekoppelt ist. Von Vorteil ist hierbei, dass nicht für jede Arbeitsspindel ein eigener Antrieb benötigt wird. Mit anderen Worten ausgedrückt kann vorgesehen sein, dass die Arbeitsspindeln für deren Antrieb ein Kraftübertragungsmittel, wie etwa eine Riemenscheibe aufweisen. Da es für die Fertigung nicht relevant ist, dass die beiden Arbeitsspindeln winkeltreu zueinander verlaufen, kann auch vorgesehen sein, dass anstatt des Zahnriemens ein Keilriemen oder ein sonstiges Antriebsmittel verwendet wird.

Zum besseren Verständnis der Erfindung wird diese anhand der nachfolgenden Figuren näher erläutert.

Es zeig in stark vereinfachter, schematischer Darstellung:

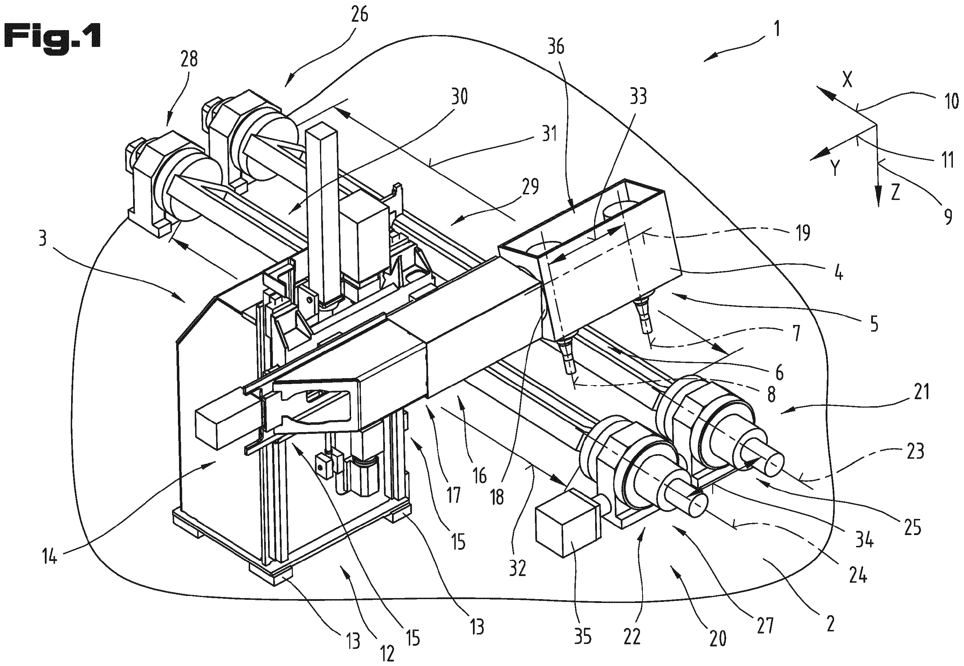

- Fig. 1: eine schematische Darstellung eines Ausführungsbeispiels einer Werkzeugmaschine.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Fig. 1 zeigt eine schematische Darstellung einer Werkzeugmaschine 1 zur spanabhebenden Bearbeitung von Werkstücken. Die Werkzeugmaschine 1 weist ein Maschinengestell 2 auf, welches als Basis für die daran angebauten Bauteile dient.

Das Maschinengestell 2 ist in Fig. 1 der Übersichtlichkeit halber nur schematisch dargestellt. Es sei jedoch festgehalten, dass das Maschinengestell 2 am Aufstellungsort verankert sein kann. Darüber hinaus dient das Maschinengestell 2 natürlich zur Aufnahme sämtlicher Bauteile der Werkzeugmaschine 1.

Weiters ist eine Spindelverstellvorrichtung 3 ausgebildet, welche am Maschinengestell 2 angeordnet ist bzw. mit diesem gekoppelt ist. Die Spindelverstellvorrichtung 3 weist einen Arbeitskopf 4 auf, an welchem eine erste Arbeitsspindel 5 und eine zweite Arbeitsspindel 6 gelagert sind. Die erste Arbeitsspindel 5 ist um eine erste Spindelachse 7 drehbar am Arbeitskopf 4 gelagert und die zweite Arbeitsspindel 6 ist um eine zweite Spindelachse 8 drehbar am Arbeitskopf 4 gelagert. Die beiden Arbeitsspindeln 5, 6 dienen jeweils zur Aufnahme eines Bearbeitungswerkzeugs und weisen hierzu eine Spannvorrichtung zur Aufnahme des Bearbeitungswerkzeuges auf.

Die Arbeitsspindeln 5, 6 sind mittels der Spindelverstellvorrichtung 3 in einer vertikalen Z-Achse 9, in einer horizontalen X-Achse 10 und in einer im rechten Winkel zur Z-Achse 9 und X-Achse 10 angeordneten Y-Achse 11 relativ zum Maschinengestell 2 verstellbar.

Die Spindelverstellvorrichtung 3 weist eine Hauptverstelleinheit 12 auf, welche mittels einer X-Achsen-Linearführung 13 mit dem Maschinengestell 2 gekoppelt ist. Zur vereinfachten Veranschaulichung ist die X-Achsen-Linearführung 13 nur rudimentär dargestellt. Insbesondere kann vorgesehen sein, dass die X-Achsen-Linearführung 13 vier Führungsschlitten aufweist, welche mit der Hauptverstelleinheit 12 gekoppelt sind und welche mit zwei Führungsschienen zusammenwirken, die mit dem Maschinengestell 2 gekoppelt sind.

Durch die X-Achsen-Linearführung 13 ist die Hauptverstelleinheit 12 in Richtung der X-Achse 10 relativ bezüglich des Maschinengestells 2 verschiebbar.

Weiters kann vorgesehen sein, dass eine Höhenverstelleinheit 14 ausgebildet ist, welche mittels einer Z-Achsen-Linearführung 15 mit der Hauptverstelleinheit 12 gekoppelt ist. Durch die Z-Achsen-Linearführung 15 ist die Höhenverstelleinheit 14 entlang der Z-Achse 9 relativ zur Hauptverstelleinheit 12 bzw. relativ zum Maschinengestell 2 verschiebbar.

Die Z-Achsen-Linearführung 15 kann ebenfalls eine Führungsschiene aufweisen, welche an der Hauptverstelleinheit 12 angeordnet ist und welche mit Führungsschlitten gekoppelt ist, die an der Höhenverstelleinheit 14 angeordnet sind.

Weiters ist eine Ausschubeinheit 16 ausgebildet, welche mittels einer Y-Achsen-Linearführung 17 an der Höhenverstelleinheit 14 angeordnet ist. Mittels der Y-Achsen-Linearführung 17 ist die Ausschubeinheit 16 in Richtung der Y-Achse 11 relativ zur Höhenverstelleinheit 14, zur Hauptverstelleinheit 12 und zum Maschinengestell 2 verschiebbar. Die Y-Achsen-Linearführung 17 kann beispielsweise in Form eines Teleskoparmes ausgeführt sein. Alternativ dazu ist es denkbar, dass die Y-Achsen-Linearführung 17 beispielsweise ebenfalls Führungsschlitten umfassen, welche mit einer Führungsschiene gekoppelt sind.

Außerdem kann vorgesehen sein, dass der Arbeitskopf 4 mittels einer Schwenklagerung 18 schwenkbar bezüglich einer Arbeitskopfschwenkachse 19 an der Ausschubeinheit 16 aufgenommen ist.

In einer nicht dargestellten Alternativvariante kann vorgesehen sein, dass der Arbeitskopf 4 mittels starr an der Ausschubeinheit 16 aufgenommen ist.

Die Arbeitskopfschwenkachse 19 ist parallel zur Y-Achse 11 ausgerichtet. Die Arbeitskopfschwenkachse 19 und die beiden Spindelachsen 7, 8 liegen vorzugsweise in einer Ebene und sind im rechten Winkel zueinander angeordnet.

Durch den beschriebenen Aufbau der Spindelverstellvorrichtung 3 ist der Arbeitskopf 4 bezüglich dem Maschinengestell 2 in der Z-Achse 9, in der X-Achse 10 und in der Y-Achse 11 verschiebbar sowie bezüglich der parallel zur Y-Achse 11 liegenden Arbeitskopfschwenkachse 19 verdrehbar.

Außerdem umfasst die Werkzeugmaschine 1 eine Werkstückspannvorrichtung 20, welche zur Aufnahme von zu bearbeitenden Werkstücken dient. Die Werkstückspannvorrichtung 20 weist einen ersten Werkstücktisch 21 und einen zweiten Werkstücktisch 22 auf. Der erste Werkstücktisch 21 ist bezüglich einer ersten Schwenkachse 23 relativ zum Maschinengestell 2 verschwenkbar. Der zweite Werkstücktisch 22 ist bezüglich einer zweiten Schwenkachse 24 relativ zum Maschinengestell 2 verschwenkbar. Die beiden Schwenkachsen 23, 24 der beiden Werkstücktische 21, 22 sind parallel zur X-Achse 10 angeordnet. Insbesondere ist vorgesehen, dass der erste Werkstücktisch 21 zur Aufnahme eines ersten Werkstückes dient und der zweite Werkstücktisch 22 zur Aufnahme eines zweiten Werkstückes dient, wobei das erste Werkstück und das zweite Werkstück in deren Außenkontur gleich zueinander sind und an den beiden Werkstücken die gleichen Bearbeitungsschritte durchgeführt werden. Die beiden Werkstücktische 21, 22 sind der Übersichtlichkeit halber in Fig. 1 ebenfalls nur rudimentär dargestellt. Natürlich können verschiedenste Befestigungsmöglichkeiten zur Befestigung der Werkstücke an den Werkstücktischen 21, 22 vorgesehen sein.

Der erste Werkstücktisch 21 ist mittels einer ersten Schwenklagerung 25 und einer zweiten Schwenklagerung 26 drehbar am Maschinengestell 2 gelagert. Analog dazu ist der zweite Werkstücktisch 22 mittels einer ersten Schwenklagerung 27 und einer zweiten Schwenklagerung 28 drehbar am Maschinengestell 2 gelagert. Die Schwenklagerungen 25, 26, 27, 28 können beispielsweise in Form von Lagerböcken ausgebildet sein, welche entsprechenden Aufnahmen am Werkstücktisch 21 befestigt sind.

Wie aus Fig. 1 ersichtlich, kann vorgesehen sein, dass der erste Werkstücktisch 21 einen Werkstückspannbereich 29 aufweist, welcher sich zwischen der ersten Schwenklagerung 25 und der zweiten Schwenklagerung 26 erstreckt. Analog dazu kann vorgesehen sein, dass der zweite Werkstücktisch 22 einen Werkstückspannbereich 30 aufweist, welcher sich zwischen der ersten Schwenklagerung 27 und der zweiten Schwenklagerung 28 des zweiten Werkstücktisches 22 erstreckt.

Der Werkstückspannbereich 29 des ersten Werkstücktisches 21 weist eine Werkstückspannlänge 31 auf. Der Werkstückspannbereich 30 des zweiten Werkstücktisches 22 weist eine Werkstückspannlänge 32 auf. Vorzugsweise ist vorgesehen, dass der erste Werkstücktisch 21 und der zweite Werkstücktisch 22 gleich ausgebildet sind.

Um die gesamte Werkstückspannlänge 31, 32 der beiden Werkstücktische 21, 22 nutzen zu können, kann vorgesehen sein, dass die X-Achsen-Linearführung 13 der Hauptverstelleinheit 12 um diesen Betrag der Werkstückspannlänge 31, 32 plus dem doppelten Abstand von der Arbeitskopfschwenkachse 19 zur Werkzeugspitze verschiebbar ist. Dadurch können auch die Stirnseiten von Werkstücken mit einer maximalen Länge die der Werkstückspannlänge 31, 32 entspricht noch bearbeitet werden. Die beiden Arbeitsspindeln 5, 6 bzw. die beiden Spindelachsen 7, 8 sind in einem Abstand 33 zueinander angeordnet. Der Abstand 33 erstreckt sich in Richtung der Y-Achse 11.

Die beiden Werkstücktische 21, 22 bzw. die beiden Schwenkachsen 23, 24 sind in einem Abstand 34 zueinander angeordnet. Der Abstand 34 erstreckt sich ebenfalls in Richtung der Y-Achse 11. Durch die beschriebene Ausprägung wird erreicht, dass die erste Arbeitsspindel 5 dem ersten Werkstücktisch 21 zugeordnet ist und dass die zweite Arbeitsspindel 6 dem zweiten Werkstücktisch 22 zugeordnet ist.

In einer Ausführungsvariante kann vorgesehen sein, dass im Arbeitskopf 4 eine Verstellvorrichtung angeordnet ist, mittels welcher der Abstand 33 der ersten Spindelachse 7 der ersten Arbeitsspindel 5 und der zweiten Spindelachse 8 der zweiten Arbeitsspindel 6 zueinander verstellt werden kann.

Alternativ dazu oder zusätzlich dazu kann vorgesehen sein, dass in der Werkstückspannvorrichtung 20 eine Verstellvorrichtung angeordnet ist, mittels welcher der Abstand 34 der beiden Werkstücktische 21, 22 bzw. der beiden Schwenkachsen 23, 24 zueinander verstellt werden kann.

Mittels der erfindungsgemäßen Werkzeugmaschine 1 können zwei Werkstücke, die baugleich ausgebildet sind, parallel zueinander bearbeitet werden. Hierbei wird das erste Werkstück am ersten Werkstücktisch 21 und das zweite Werkstück am zweiten Werkstücktisch 22 gespannt. Das Werkzeug der ersten Arbeitsspindel 5 bearbeitet das erste Werkstück und das Werkzeug der zweiten Arbeitsspindel 6 bearbeitet das zweite Werkstück. Durch den erfindungsgemäßen Aufbau der Werkzeugmaschine 1 erfolgt die Bearbeitung des ersten Werkstückes und des zweiten Werkstückes synchron. Somit können mittels einer möglichst einfach aufgebauten Werkzeugmaschine 1 zwei Werkstücke gleichzeitig bearbeitet werden, wodurch die Auslastung der Werkzeugmaschine 1 bzw. deren Produktivität verbessert werden kann.

Um die Werkzeugmaschine 1 möglichst günstig aufbauen zu können, kann darüber hinaus vorgesehen sein, dass die Werkstücktische 21, 22 mittels einer gemeinsamen Antriebseinheit 35 geschwenkt werden. Die Antriebseinheit 35 kann beispielsweise in Form eines Torquemotors ausgebildet sein.

Der Torquemotor kann beispielsweise mittels einem Riementrieb mit den beiden Werkstücktischen 21, 22 gekoppelt sein. Alternativ dazu kann vorgesehen sein, dass der Torquemotor mittels einem Schneckengetriebe mit den beiden Werkstücktischen 21, 22 gekoppelt ist.

In wieder einer andern Alternativvariante kann vorgesehen sein, dass der Rotor des Torquemotors direkt in den Werkstücktischen 21, 22 integriert ist und somit je Werkstücktisch 21, 22 ein eigener Torquemotor ausgebildet ist.

Weiters kann ebenfalls vorgesehen sein, dass die beiden Arbeitsspindeln 5, 6 von einer gemeinsamen Antriebseinheit 36 angetrieben werden. Die Antriebseinheit 36 kann beispielsweise durch einen Drehstromasynchronmotor gebildet sein, welcher mit einem Frequenzumrichter angesteuert wird.

Weiters ist es auch denkbar, dass die Antriebseinheit 36 in Form eines Synchronmotors ausgebildet ist.

Natürlich kann auch vorgesehen sein, dass jede der Arbeitsspindeln 5, 6 von einer eigenen Antriebseinheit 36 angetrieben wird. Hierbei kann vorgesehen sein, dass die Arbeitsspindel 5, 6 gleichzeitig der Läufer der Antriebseinheit 36 ist.

Die Arbeitsspindeln 5, 6 der in Fig. 1 dargestellten Werkzeugmaschine 1 sind bezüglich der Z-Achse 9, der X-Achse 10 und der Y-Achse 11 verschiebbar und bezüglich einer Parallelen zur Y-Achse verschwenkbar. Die in den Werkstücktischen 21, 22 aufgenommenen Werkstücke sind bezüglich einer Parallelen zur X-Achse 10 verschwenkbar. Somit weisen die Arbeitsspindeln 5, 6 fünf Freiheitsgrade bezüglich der Verstellung relativ zum bearbeitenden Werkstück auf.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkzeugmaschine | 28 | zweite Schwenklagerung zweiter Werkstücktisch |
| 2 | Maschinengestell | | |
| 3 | Spindelverstellvorrichtung | 29 | Werkstückspannbereich erster Werkstücktisch |
| 4 | Arbeitskopf | | |
| 5 | erste Arbeitsspindel | 30 | Werkstückspannbereich zweiter Werkstücktisch |
| 6 | zweite Arbeitsspindel | | |
| 7 | erste Spindelachse | 31 | Werkstückspannlänge Werkstückspannbereich erster Werkstücktisch |
| 8 | zweite Spindelachse | | |
| 9 | Z-Achse | | |
| 10 | X-Achse | 32 | Werkstückspannlänge Werkstückspannbereich zweiter Werkstücktisch |
| 11 | Y-Achse | | |
| 12 | Hauptverstelleinheit | | |
| 13 | X-Achsen-Linearführung | 33 | Abstand Arbeitsspindeln |
| 14 | Höhenverstelleinheit | 34 | Abstand Werkstücktische |
| 15 | Z-Achsen-Linearführung | 35 | Antriebseinheit Werkstücktische |
| 16 | Ausschubeinheit | 36 | Antriebseinheit Arbeitsspindeln |
| 17 | Y-Achsen-Linearführung | | |
| 18 | Schwenklagerung Arbeitskopf | | |
| 19 | Arbeitskopfschwenkachse | | |
| 20 | Werkstückspannvorrichtung | | |
| 21 | erster Werkstücktisch | | |
| 22 | zweiter Werkstücktisch | | |
| 23 | erste Schwenkachse | | |
| 24 | zweite Schwenkachse | | |
| 25 | erste Schwenklagerung erster Werkstücktisch | | |
| 26 | zweite Schwenklagerung erster Werkstücktisch | | |
| 27 | erste Schwenklagerung zweiter Werkstücktisch | | |

## Patentansprüche

1. Werkzeugmaschine (1) umfassend:
ein Maschinengestell (2);
eine Spindelverstellvorrichtung (3), welche am Maschinengestell (2) angeordnet ist;
zumindest eine erste Arbeitsspindel (5), welche um eine erste Spindelachse (7) drehbar gelagert ist, und eine zweite Arbeitsspindel (6), welche um eine zweite Spindelachse (8) drehbar gelagert ist, wobei die Arbeitsspindeln (5, 6) an der Spindelverstellvorrichtung (3) aufgenommen sind und mittels der Spindelverstellvorrichtung (3) in einer Z-Achse (9), relativ zum Maschinengestell (2) verstellbar sind;
eine Werkstückspannvorrichtung (20), welche am Maschinengestell (2) angeordnet ist und zum Aufnehmen zumindest eines ersten Werkstückes und eines zweiten Werkstückes ausgebildet ist,
wobei
die Spindelverstellvorrichtung (3) einen Arbeitskopf (4) aufweist, an dem die beiden Arbeitsspindeln (5, 6) angeordnet sind und dass die Werkstückspannvorrichtung (20) zumindest einen ersten Werkstücktisch (21) und einen zweiten Werkstücktisch (22) umfasst, wobei der erste Werkstücktisch (21) um eine erste Schwenkachse (23), welche parallel zu einer X-Achse (10) ausgerichtet ist, schwenkbar gelagert ist und der zweite Werkstücktisch (22) um eine zweite Schwenkachse (24), welche parallel zur X-Achse (10) ausgerichtet ist, schwenkbar gelagert ist und dass die erste Arbeitsspindel (5) dem ersten Werkstücktisch (21) zugeordnet ist und die zweite Arbeitsspindel (6) dem zweiten Werkstücktisch (22) zugeordnet ist, wobei die erste Schwenkachse (23) des ersten Werkstücktisches (21) und die zweite Schwenkachse (24) des zweiten Werkstücktisches (22) bezüglich einer Y-Achse (11) in einem Abstand (34) versetzt zueinander angeordnet sind, wobei die Y-Achse (11) im rechten Winkel zur Z-Achse (9) und X-Achse (10) angeordnet ist, wobei die beiden Werkstücktische (21, 22) jeweils mittels einer ersten Schwenklagerung (25, 27) und mittels einer zweiten Schwenklagerung (26, 28) mit dem Maschinengestell (2) gekoppelt sind, wobei beide Werkstücktische (21, 22) einen Werkstückspannbereich (29, 30) aufweisen, welcher jeweils zwischen den beiden Schwenklagerungen (25 und 27; 26 und 28) ausgebildet ist, wobei
die Arbeitsspindeln (5, 6) mittels der Spindelverstellvorrichtung (3) in der X-Achse (10) und in der Y-Achse (11) relativ zum Maschinengestell (2) verstellbar sind, **dadurch gekennzeichnet, dass** der Arbeitskopf (4) um eine Arbeitskopfschwenkachse (19), welche parallel zur Y-Achse (11) ausgerichtet ist, schwenkbar gelagert ist.

2. Werkzeugmaschine nach Anspruch 1, **dadurch gekennzeichnet, dass** die Spindelverstellvorrichtung (3) eine Hauptverstelleinheit (12) aufweist, welche mittels einer X-Achsen-Linearführung (13) mit dem Maschinengestell (2) gekoppelt ist und entlang der X-Achse (10) relativ zum Maschinengestell (2) verschiebbar ist und dass die Spindelverstellvorrichtung (3) eine Höhenverstelleinheit (14) aufweist, welche mittels einer Z-Achsen-Linearführung (15) mit der Hauptverstelleinheit (12) gekoppelt ist und entlang der Z-Achse (9) relativ zur Hauptverstelleinheit (12) verschiebbar ist und dass die Spindelverstellvorrichtung (3) eine Ausschubeinheit (16) aufweist, welche mittels einer Y-Achsen-Linearführung (17) mit der Höhenverstelleinheit (14) gekoppelt ist und entlang der Y-Achse (11) relativ zur Höhenverstelleinheit (14) verschiebbar ist, wobei der Arbeitskopf (4) mittels einer Schwenklagerung (18) mit der Ausschubeinheit (16) gekoppelt ist und um eine Arbeitskopfschwenkachse (19) relativ zur Ausschubeinheit (16) schwenkbar ist.

3. Werkzeugmaschine nach einem der vorhergehenden Ansprüche, **dadurch gekennzeichnet, dass** der Werkstückspannbereich (29, 30) bezüglich der X-Achse (10) eine nutzbare Werkstückspannlänge (31, 32) zwischen 1000mm und 8000mm, insbesondere zwischen 1400mm und 5000mm, bevorzugt zwischen 1500mm und 2500mm aufweist.

4. Werkzeugmaschine nach einem der vorhergehenden Ansprüche, **dadurch gekennzeichnet, dass** die erste Spindelachse (7) der ersten Arbeitsspindel (5) und die zweite Spindelachse (8) der zweiten Arbeitsspindel (6) bezüglich der Y-Achse (11) in einem Abstand (33) versetzt zueinander angeordnet sind.

5. Werkzeugmaschine nach Anspruch 4, **dadurch gekennzeichnet, dass** der Abstand (33) zwischen 200mm und 1500mm, insbesondere zwischen 300mm und 1000mm, bevorzugt zwischen 400mm und 600mm beträgt.

6. Werkzeugmaschine nach Anspruch 4 oder 5, **dadurch gekennzeichnet, dass** im Arbeitskopf (4) eine Verstellvorrichtung angeordnet ist, mittels welcher der Abstand (33) der ersten Spindelachse (7) der ersten Arbeitsspindel (5) und der zweiten Spindelachse (8) der zweiten Arbeitsspindel (6) zueinander verstellt werden kann.

7. Werkzeugmaschine nach einem der vorhergehenden Ansprüche, **dadurch gekennzeichnet, dass** der Abstand (33) zwischen der ersten Spindelachse (7) der ersten Arbeitsspindel (5) und der zweiten Spindelachse (8) der zweiten Arbeitsspindel (6) und der Abstand (34) zwischen der ersten Schwenkachse (23) des ersten Werkstücktisches (21) und der zweiten Schwenkachse (24) des zweiten Werkstücktisches (22) gleich groß sind.

8. Werkzeugmaschine nach einem der vorhergehenden Ansprüche, **dadurch gekennzeichnet, dass** die beiden Werkstücktische (21, 22) in deren Drehbewegung um die Schwenkachsen (23, 24) von einer gemeinsamen Antriebseinheit (35) angetrieben werden.

9. Werkzeugmaschine nach Anspruch 8, **dadurch gekennzeichnet, dass** die gemeinsame Antriebseinheit (35) mittels einem Schneckengetriebe mit den beiden Werkstücktischen (21, 22) gekoppelt ist.

10. Werkzeugmaschine nach Anspruch 8, **dadurch gekennzeichnet, dass** die gemeinsame Antriebseinheit (35) mittels einem Zahnriemen mit den beiden Werkstücktischen (21, 22) gekoppelt ist.

11. Werkzeugmaschine nach einem der Ansprüche 8 bis 10, **dadurch gekennzeichnet, dass** die Antriebseinheit (35) in Form eines Torquemotors ausgebildet ist.

12. Werkzeugmaschine nach einem der vorhergehenden Ansprüche, **dadurch gekennzeichnet, dass** in einer unverschwenkten Stellung des Arbeitskopfes (4) die Spindelachsen (7, 8) der beiden Arbeitsspindeln (5, 6) parallel zur Z-Achse (9) liegen.

13. Werkzeugmaschine nach einem der vorhergehenden Ansprüche, **dadurch gekennzeichnet, dass** die beiden Werkstücktische (21, 22) ausschließlich um die X-Achse (10) schwenkbar sind und ansonsten nicht relativ zum Maschinengestell (2) bewegbar sind.

14. Werkzeugmaschine nach einem der vorhergehenden Ansprüche, **dadurch gekennzeichnet, dass** die beiden Arbeitsspindeln (5, 6) in deren Drehbewegung um die Spindelachsen (7, 8) von einer gemeinsamen Antriebseinheit (36) angetrieben werden, insbesondere dass die gemeinsame Antriebseinheit (36) mittels einem Zahnriemen mit den beiden Arbeitsspindeln (5, 6) gekoppelt ist.

15. Werkzeugmaschine nach einem der vorhergehenden Ansprüche, **dadurch gekennzeichnet, dass** die Z-Achse (9) vertikal ausgerichtet ist.

16. Werkzeugmaschine nach einem der vorhergehenden Ansprüche, **dadurch gekennzeichnet, dass** die X-Achse (10) horizontal ausgerichtet ist.

## Claims

1. A machine tool (1) comprising:
a machine frame (2);
a spindle adjusting device (3), which is arranged on the machine frame (2);
at least a first working spindle (5), which is mounted so as to be rotatable about a first spindle axis (7), and a second working spindle (6), which is mounted so as to be rotatable about a second spindle axis (8), wherein the working spindles (5, 6) are received on the spindle adjusting device (3) and are adjustable in a Z-axis (9), relative to the machine frame (2), by means of the spindle adjusting device (3);
a workpiece clamping device (20), which is arranged on the machine frame (2) and is designed to receive at least a first workpiece and a second workpiece, wherein
the spindle adjusting device (3) has a working head (4), on which the two working spindles (5, 6) are arranged, and that the workpiece clamping device (20) comprises at least a first workpiece table (21) and a second workpiece table (22), wherein the first workpiece table (21) is mounted so as to be pivotable about a first pivot axis (23), which is oriented in parallel with an X-axis (10), and the second workpiece table (22) is mounted so as to be pivotable about a second pivot axis (24), which is oriented in parallel with the X-axis (10), and that the first working spindle (5) is assigned to the first workpiece table (21) and the second working spindle (6) is assigned to the second workpiece table (22), wherein the first pivot axis (23) of the first workpiece table (21) and the second pivot axis (24) of the second workpiece table (22) are arranged so as to be offset at a distance (34) relative to one another with respect to a Y-axis (11), wherein the Y-axis (11) is arranged at a right angle relative to the Z-axis (9) and the X-axis (10), wherein the two workpiece tables (21, 22) are each coupled to the machine frame (2) by means of a first pivot bearing (25, 27) and by means of a second pivot bearing (26, 28), wherein both workpiece tables (21, 22) have a workpiece clamping region (29, 30), which is, in each case, formed between the two pivot bearings (25 and 27; 26 and 28), wherein
the working spindles (5, 6) are adjustable in the X-axis (10) and in the Y-axis (11) relative to the machine frame (2) by means of the spindle adjusting device (3), **characterized in that** the working head (4) is mounted so as to be pivotable about a working head pivot axis (19), which is oriented in parallel to the Y-axis (11).

2. The machine tool according to claim 1, **characterized in that** the spindle adjusting device (3) has a main adjusting unit (12), which is coupled to the machine frame (2) by means of an X-axis linear guide (13) and is displaceable along the X-axis (10) relative to the machine frame (2), and that the spindle adjusting unit (3) has a height adjusting unit (14), which is coupled to the main adjusting unit (12) by means of a Z-axis linear guide (15) and is displaceable along the Z-axis (9) relative to the main adjusting unit (12), and that the spindle adjusting device (3) has an extension unit (16), which is coupled to the height adjusting unit (14) by means of a Y-axis linear guide (17) and is displaceable along the Y-axis (11) relative to the height adjusting unit (14), wherein the working head (4) is coupled t the extension unit (16) by means of a pivot bearing (18) and is pivotable relative to the extension unit (16) about a working head pivot axis (19).

3. The machine tool according to one of the preceding claims, **characterized in that** the workpiece clamping region (29, 30) has a usable workpiece clamping length (31, 32) with respect to the Y-axis (10) of between 1000 mm and 8000 mm, in particular between 1400 mm and 5000 mm, preferably between 1500 mm and 2500 mm.

4. The machine tool according to one of the preceding claims, **characterized in that** the first spindle axis (7) of the first working spindle (5) and the second working spindle (8) of the second working spindle (6) are arranged offset at a distance (33) relative to one another with respect to the Y-axis (11).

5. The machine tool according to claim 4, **characterized in that** the distance (33) is between 200 mm and 1500 mm, in particular between 300 mm and 1000 mm, preferably between 400 mm and 600 mm.

6. The machine tool according to claim 4 or 5, **characterized in that** an adjusting device is arranged in the working head (4), by means of which adjusting device the distance (33) of the first spindle axis (7) of the first working spindle (5) and the second spindle axis (8) of the second working spindle (6) relative to one another can be adjusted.

7. The machine tool according to one of the preceding claims, **characterized in that** the distance (33) between the first spindle axis (7) of the first working spindle (5) and the second spindle axis (8) of the second working spindle (6) and the distance (34) between the first pivot axis (23) of the first workpiece table (21) and the second pivot axis (24) of the second workpiece table (22) are equally great.

8. The machine tool according to one of the preceding claims, **characterized in that** in their rotational movement about the pivot axes (23, 24), the two workpiece tables (21, 22) are driven by a common drive unit (35).

9. The machine tool according to claim 8, **characterized in that** the common drive unit (35) is coupled to the two workpiece tables (21, 22) by means of a worm gear.

10. The machine tool according to claim 8, **characterized in that** the common drive unit (35) is coupled to the two workpiece tables (21, 22) by means of a toothed belt.

11. The machine tool according to one of claims 8 to 10, **characterized in that** drive unit (35) is designed in the form of a torque motor.

12. The machine tool according to one of the preceding claims, **characterized in that** in an unpivoted position of the working head (4), the spindle axes (7, 8) of the two working spindles (5, 6) are parallel to the Z-axis (9).

13. The machine tool according to one of the preceding claims, **characterized in that** the two workpiece tables (21, 22) are pivotable only about the X-axis (10) and are otherwise not movable relative to the machine frame (2).

14. The machine tool according to one of the preceding claims, **characterized in that** in their rotational movement about the spindle axes (7, 8), the two working spindles (5, 6) are driven by a common drive unit (36), in particular that the common drive unit (36) is coupled to the two working spindles (5, 6) by means of a toothed belt.

15. The machine tool according to one of the preceding claims, **characterized in that** the Z-axis (9) has a vertical orientation.

16. The machine tool according to one of the preceding claims, **characterized in that** the X-axis (10) has a horizontal orientation.

## Revendications

1. Machine-outil (1) comprenant :
un châssis de machine (2) ;
un dispositif de réglage de broche (3) qui est disposé sur le châssis de machine (2) ;
au moins une première broche de travail (5), qui est logée de manière rotative autour d'un premier axe de broche (7), et une deuxième broche de travail (6), qui est logée de manière rotative autour d'un deuxième axe de broche (8), dans laquelle les broches de travail (5, 6) sont logées au niveau du dispositif de réglage de broche (3) et peuvent être réglées au moyen du dispositif de réglage de broche (3), dans un axe Z (9), par rapport au châssis de machine (2) ;
un dispositif de serrage de pièce (20) qui est disposé sur le châssis de machine (2) et qui est conçu pour le logement d'au moins une première pièce et d'une deuxième pièce, dans laquelle
le dispositif de réglage de broche (3) comprend une tête de travail (4) sur laquelle sont disposées les deux broches de travail (5, 6) et le dispositif de serrage de pièce (20) comprend au moins une première table de pièce (21) et une deuxième table de pièce (22), dans laquelle la première table de pièce (21) est logée de manière pivotante autour d'un premier axe de pivotement (23), qui est orienté parallèlement à un axe X (10), et la deuxième table de pièce (22) est logée de manière pivotante autour d'un deuxième axe de pivotement (24), qui est orienté parallèlement à l'axe X (10) et la première broche de travail (5) correspond à la première table de pièce (21) et la deuxième broche de travail (6) correspond à la deuxième table de pièce (22), dans laquelle le premier axe de pivotement (23) de la première table de pièce (21) et le deuxième axe de pivotement (24) de la deuxième table de pièce (22) sont disposés de manière décalée entre eux par rapport à un axe Y (11), à une distance (34), dans laquelle l'axe Y (11) est disposé à angle droit par rapport à l'axe Z (9) et à l'axe X (10), dans laquelle les deux tables de pièces (21, 22) sont couplées, respectivement au moyen d'un premier palier de pivotement (25, 27) et au moyen d'un deuxième palier de pivotement (26, 28), avec le châssis de machine (2), dans laquelle les deux tables de pièces (21, 22) comprennent une partie de serrage de pièce (29, 30), qui est réalisée respectivement entre les deux paliers de pivotement (25 et 27 ; 26 et 28), dans laquelle
les broches de travail (5, 6) peuvent être réglées, au moyen du dispositif de réglage de broche (3), dans l'axe X (10) et dans l'axe Y (11), par rapport au châssis de machine (2), **caractérisée en ce que** la tête de travail (4) est logée de manière pivotante autour d'un axe de pivotement de tête de travail (19) qui est orientée parallèlement à l'axe Y (11).

2. Machine-outil selon la revendication 1, **caractérisée en ce que** le dispositif de réglage de broche (3) comprend une unité de réglage principale (12), qui est couplée, au moyen d'un guidage linéaire dans l'axe X (13), avec le châssis de machine (2), et peut coulisser le long de l'axe X (10) par rapport au châssis de machine (2), et **en ce que** le dispositif de réglage de broche (3) comprend une unité de réglage en hauteur (14) qui est couplée, au moyen d'un guidage linéaire dans l'axe Z (15), avec l'unité de réglage principale (12) et peut coulisser le long de l'axe Z (9) par rapport à l'unité de réglage principale (12) et **en ce que** le dispositif de réglage de broche (3) comprend une unité d'éjection (16) qui est couplée, au moyen d'un guidage linéaire dans l'axe Y (17), avec l'unité de réglage en hauteur (14) et peut coulisser le long de l'axe Y (11) par rapport à l'unité de réglage en hauteur (14), dans laquelle la tête de travail (4) est couplée, au moyen d'un palier de pivotement (18), avec l'unité d'éjection (16) et peut pivoter autour d'un axe de pivotement de tête de travail (19) par rapport à l'unité d'éjection (16).

3. Machine-outil selon l'une des revendications précédentes, **caractérisée en ce que** la partie de serrage de pièce (29, 30) présente, relativement à l'axe X (10), une longueur de serrage de pièce (31, 32) entre 1000 mm et 8000 mm, plus particulièrement entre 1400 mm et 5000 mm, de préférence entre 1500 mm et 2500 mm.

4. Machine-outil selon l'une des revendications précédentes, **caractérisée en ce que** le premier axe de broche (7) de la première broche de travail (5) et le deuxième axe de broche (8) de la deuxième broche de travail (6) sont de manière décalée entre eux, relativement à l'axe Y (11), à une distance (33).

5. Machine-outil selon la revendication 4, **caractérisée en ce que** la distance (33) est entre 200 mm et 1500 mm, plus particulièrement entre 300 mm et 1000 mm, de préférence entre 400 mm et 600 mm.

6. Machine-outil selon la revendication 4 ou 5, **caractérisée en ce que**, dans la tête de travail (4), est disposé un dispositif de réglage, au moyen duquel la distance (33) entre le premier axe de broche (7) de la première broche de travail (5) et le deuxième axe de broche (8) de la deuxième broche de travail (6) peut être réglée.

7. Machine-outil selon l'une des revendications précédentes, **caractérisée en ce que** la distance (33) entre le premier axe de broche (7) de la première broche de travail (5) et le deuxième axe de broche (8) de la deuxième broche de travail (6) et la distance (34) entre le premier axe de pivotement (23) de la première table de pièce (21) et le deuxième axe de pivotement (24) de la deuxième table de pièce (22) sont égales.

8. Machine-outil selon l'une des revendications précédentes, **caractérisée en ce que** les deux tables de pièces (21, 22) sont entraînées dans un mouvement rotatif autour des axes de pivotement (23, 24) par une unité d'entraînement commune (35).

9. Machine-outil selon la revendication 8, **caractérisée en ce que** l'unité d'entraînement commune (35) est couplée, au moyen d'une transmission à vis sans fin, avec les deux tables de pièces (21, 22).

10. Machine-outil selon la revendication 8, **caractérisée en ce que** l'unité d'entraînement commune (35) est couplée, au moyen d'une courroie dentée, avec les deux tables de pièces (21, 22).

11. Machine-outil selon l'une des revendications 8 à 10, **caractérisée en ce que** l'unité d'entraînement (35) est conçue sous la forme d'un moteur à couple.

12. Machine-outil selon l'une des revendications précédentes, **caractérisée en ce que**, dans une position non pivotée de la tête de travail (4), les axes de broches (7, 8) des deux broches de travail (5, 6) sont parallèles à l'axe Z (9).

13. Machine-outil selon l'une des revendications précédentes, **caractérisée en ce que** les deux tables de pièces (21, 22) peuvent pivoter exclusivement autour de l'axe X (10) et sinon ne peuvent pas se déplacer par rapport au châssis de machine (2).

14. Machine-outil selon l'une des revendications précédentes, **caractérisée en ce que** les deux broches de travail (5, 6) sont entraînées, dans leur mouvement rotatif autour des axes de broches (7, 8), par une unité d'entraînement commune (36), plus particulièrement **en ce que** l'unité d'entraînement commune (36) est couplée, au moyen d'une courroie dentée, avec les deux broches de travail (5, 6).

15. Machine-outil selon l'une des revendications précédentes, **caractérisée en ce que** l'axe Z (9) est orienté verticalement.

16. Machine-outil selon l'une des revendications précédentes, **caractérisée en ce que** l'axe X (10) est orienté horizontalement.
